# EUROPEAN PATENT APPLICATION

(11) **EP 4 696 647 A1**
(43) Date of publication of application: **18.02.2026**
(21) Application number: 24788641.9
(22) Date of filing: 03.04.2024
(51) Int. Cl.: C01B 17/22

(54) **METHOD FOR PRODUCING LITHIUM SULFIDE**

(30) Priority: 11.04.2023 JP 2023063881; 14.03.2024 JP 2024040042
(71) Applicant: Mitsubishi Materials Corporation, Tokyo 100-8117 (JP)
(72) Inventor: KAKUKI, Shotaro, Naka-shi, Ibaraki 311-0102 (JP); KUBA, Kanji, Naka-shi, Ibaraki 311-0102 (JP)
(74) Representative: Gille Hrabal Partnerschaftsgesellschaft mbB Patentanwälte
(86) International application number: PCT/JP2024/013762
(87) International publication number: WO 2024/214614

(57) **Abstract**

A method for producing lithium sulfide, the method including a heat treatment step of flowing a sulfur gas into a reaction chamber accommodating a lithium salt and heating the lithium salt to generate lithium sulfide, and which can suppress a residue of unreacted raw materials and generation of by-products and can stably produce high-quality lithium sulfide, since an excessive sulfur gas can be discharged as a waste gas. In heating conditions in the heat treatment step, a heating temperature is preferably in a range of 500°C or higher and 938°C or lower.

## Description

### TECHNICAL FIELD

The present invention relates to, for example, a method for producing lithium sulfide, which is suitable for a sulfide-based solid electrolyte of an all-solid state battery.

Priority is claimed on Japanese Patent Application No. 2023-063881, filed April 11, 2023, and Japanese Patent Application No. 2024-040042, filed March 14, 2024, the contents of which are incorporated herein by reference.

### BACKGROUND ART

A lithium ion battery is widely used as a power source for vehicles such as electric vehicles (EVs) and hybrid electric vehicles (HEVs) and electronic devices such as mobile phones and laptop computers. In a lithium ion battery in the related art, an organic electrolytic solution in which a lithium salt such as lithium hexafluorophosphate (LiPF₆) is dissolved in an organic solvent is used as an electrolyte.

Such an organic electrolytic solution is flammable and may be damaged by excessive temperature rise or impact. In addition, in a lithium ion battery in which lithium metal is used for an anode, lithium metal in a dendrite shape grows on a surface of the anode during charging, which may cause internal short-circuit between electrodes and cause a problem.

In order to improve safety and durability of the lithium ion battery of the related art using such an organic electrolytic solution, an all-solid state type lithium ion battery using a sulfide-based solid electrolyte has been proposed. As the sulfide-based solid electrolyte currently being proposed, Li₂S-P₂S₅-based, Li₂S-P₂S₃-based, Li₂S-SiS₂-based, Li₂S-Ga₂S₂-based, and Li₂S-GeS₂-based are exemplary examples.

In any of these sulfide-based solid electrolytes, lithium sulfide (Li₂S) having a high purity is used as a constituent material.

As a method for producing high-purity lithium sulfide, for example, Patent Document 1 discloses a method for causing lithium hydroxide to react with hydrogen sulfide in an aprotic organic solvent to generate lithium hydrosulfide, and obtaining lithium sulfide from the lithium hydrosulfide.

In addition, Patent Document 2 discloses a method for obtaining lithium sulfide by repeating a reaction cycle in which lithium metal is reacted with a sulfur gas or hydrogen sulfide to generate lithium sulfide on a surface of the lithium metal, an unreacted lithium metal is fused and diffused and permeated into the already generated lithium sulfide, and then the unreacted lithium metal is reacted with the sulfur gas or hydrogen sulfide again.

Patent Document 3 proposes a method for producing lithium sulfide by reacting lithium carbonate with hydrogen sulfide.

In addition, Patent Document 4 discloses a method for producing lithium sulfide by mixing lithium sulfate and a carbon material and heating the mixture. In this method, it is also disclosed that unreacted raw materials are reduced by making both lithium sulfate and the carbon material in a fine particle shape to increase a reaction area.

Further, Patent Document 5 discloses a method for obtaining lithium sulfide by thermally reducing lithium sulfate with a carbon material in a vacuum atmosphere.

### Citation List

### Patent Documents

Patent Document 1: Japanese Unexamined Patent Application, First Publication No. 2006-151725
Patent Document 2: Japanese Unexamined Patent Application, First Publication No. H09-110404
Patent Document 3: Japanese Unexamined Patent Application, First Publication No. 2012-221819
Patent Document 4: Japanese Unexamined Patent Application, First Publication No. 2013-227180
Patent Document 5: Japanese Unexamined Patent Application, First Publication No. 2021-147251

### SUMMARY OF INVENTION

### Technical Problem

Incidentally, in the invention disclosed in Patent Document 1, since an aprotic organic solvent is required to be used and treatment of the used organic solvent is separately required, there is a problem that the production process is complicated and the production cost is high. In addition, there was a concern that a part of the aprotic organic solvent may remain in the lithium sulfide generated.

In the invention disclosed in Patent Document 2, it is necessary to repeatedly cause lithium metal to react with a sulfur gas or hydrogen sulfide a plurality of times, and there is a problem that the production time increases and the production efficiency is low. **In** addition, since lithium metal has high reactivity and an oxide film is likely to be generated on a surface, there is a problem that it is difficult to handle a raw material, such as a need to handle the raw material in an inert gas atmosphere. In addition, in a case where a reaction cycle was insufficient, there was a concern that unreacted substances remained in the lithium sulfide generated.

In the invention disclosed in Patent Document 3, it is necessary to use a toxic hydrogen sulfide gas, and there is a problem that equipment cost is high due to management of airtightness of a reaction apparatus, treatment of an unreacted hydrogen sulfide gas, and the like. In addition, in a case where the reaction is insufficient, there is a concern that the unreacted substances may remain in the lithium sulfide generated.

Here, in Patent Documents 4 and 5, it is not necessary to use an organic solvent or hydrogen sulfide, and handling or management is relatively easy.

However, in the invention disclosed in Patent Document 4, it was necessary to carry out steps such as pulverization, mixing, extrusion granulation, and the like in order to obtain a granular mixture, and there was a problem that a yield decreases due to a loss of raw materials. In addition, since the process is multi-step, there was a concern that a mixing ratio between lithium sulfate and a carbon material in a mixture may vary. In addition, in a case where the lithium sulfate is hydrated in the mixing step, a part of water-soluble lithium sulfate is dissolved, which may cause variation in a composition in the granular mixture. Therefore, there was a problem in that quality of the produced lithium sulfide is not stable.

In addition, in the invention disclosed in Patent Document 5, since granulation is not performed, it is possible to suppress the loss of the raw materials or the variation in the composition, but there was a concern that problems such as a residue of unreacted raw materials and generation of by-products due to poor contact between lithium sulfate and the carbon material may occur.

The present invention has been made in view of the above circumstances, and an object of the present invention is to provide a method for producing lithium sulfide, which can suppress a residue of unreacted raw materials and generation of by-products and can stably produce high-quality lithium sulfide, since an excessive sulfur gas can be discharged as a waste gas.

### Solution to Problem

In order to solve the above-described problems, a method for producing lithium sulfide according to Aspect 1 of the present invention includes a heat treatment step of flowing a sulfur gas into a reaction chamber accommodating a lithium salt and heating the lithium salt to generate lithium sulfide.

According to the method for producing lithium sulfide of Aspect 1 of the present invention, since the method includes the heat treatment step of flowing the sulfur gas into the reaction chamber accommodating the lithium salt and heating the lithium salt to generate the lithium sulfide, the lithium sulfide can be efficiently produced by directly causing the lithium salt to react with the sulfur gas, and it is possible to suppress a residue of unreacted raw materials and generation of by-products.

The sulfur gas (elemental sulfur gas) may be mixed with an inert gas at any ratio and flow into the reaction chamber.

The method for producing lithium sulfide according to Aspect 2 of the present invention is the method for producing lithium sulfide according to Aspect 1 of the present invention, in which, in heating conditions in the heat treatment step, a heating temperature is in a range of 500°C or higher and 938°C or lower.

According to the method for producing lithium sulfide according to Aspect 2 of the present invention, since, in the heat treatment step, the heating temperature is in the range of 500°C or higher and 938°C or lower, it is possible to sufficiently promote a reaction between the lithium salt and the sulfur gas, and it is possible to efficiently produce high-quality lithium sulfide with a small amount of unreacted raw materials and by-products.

The method for producing lithium sulfide according to Aspect 3 of the present invention is the method for producing lithium sulfide according to Aspect 1 or 2 of the present invention, in which the lithium salt is one or two or more selected from lithium sulfate, lithium carbonate, lithium hydroxide, and lithium oxide.

According to the method for producing lithium sulfide according to Aspect 3 of the present invention, since the lithium salt is one or two or more selected from lithium sulfate, lithium carbonate, lithium hydroxide, and lithium oxide, it is possible to reliably produce lithium sulfide by a reaction between the lithium salt and the sulfur gas.

The method for producing lithium sulfide according to Aspect 4 of the present invention is the method for producing lithium sulfide according to any one of Aspects 1 to 3 of the present invention, in which a sulfur partial pressure P_{S} in the reaction chamber in the heat treatment step is 1 Pa or more.

According to the method for producing lithium sulfide according to Aspect 4 of the present invention, since the sulfur partial pressure P_{S} in the reaction chamber in the heat treatment step is 1 Pa or more, the reaction between the lithium salt and the sulfur gas reliably proceeds, and it is possible to efficiently produce lithium sulfide. In addition, it is possible to suppress lithium raw materials from remaining and being mixed with the generated lithium sulfide as an impurity, and to produce high-quality lithium sulfide having a small amount of impurities.

The method for producing lithium sulfide according to Aspect 5 of the present invention is the method for producing lithium sulfide according to any one of Aspects 1 to 4 of the present invention, in which an oxygen partial pressure P_{O} in the reaction chamber in the heat treatment step is 1 × 10³ Pa or less.

According to the method for producing lithium sulfide according to Aspect 5 of the present invention, since the oxygen partial pressure Po in the reaction chamber in the heat treatment step is 1 × 10³ Pa or less, it is possible to suppress the generation of a lithium compound other than lithium sulfide due to the reaction between the lithium salt and oxygen, and it is possible to produce high-quality lithium sulfide having a small amount of impurities. **In** addition, it is possible to suppress the consumption of the lithium salt by an oxygen gas, and it is possible to efficiently produce lithium sulfide.

The method for producing lithium sulfide according to Aspect 6 of the present invention is the method for producing lithium sulfide according to any one of Aspects 1 to 5 of the present invention, in which a material other than lithium carbonate is used as the lithium salt.

According to the method for producing lithium sulfide according to Aspect 6 of the present invention, since the material other than lithium carbonate is used as the lithium salt, it is possible to suppress generation of a carbon dioxide gas during the reaction.

### Advantageous Effects of Invention

According to the present invention, it is possible to provide the method for producing lithium sulfide, which can stably produce high-quality lithium sulfide by discharging an excessive amount of a sulfur gas as a waste gas, thereby suppressing a residue of unreacted raw materials and generation of by-products.

### BRIEF DESCRIPTION OF DRAWINGS

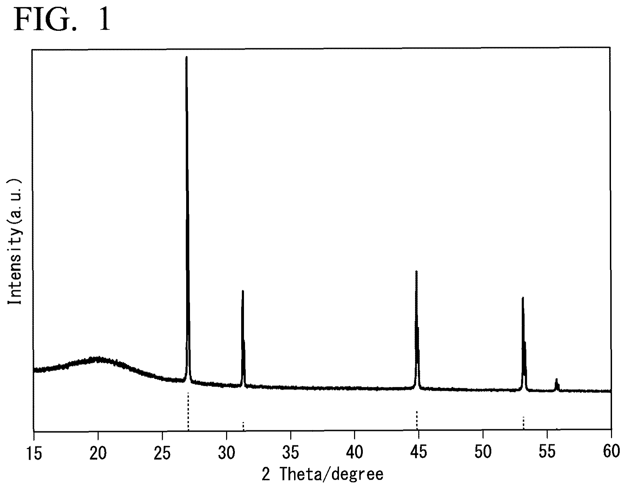

[FIG. 1] A powder X-ray diffraction measurement result of lithium sulfide generated in Examples.

### DESCRIPTION OF EMBODIMENTS

Hereinafter, embodiments of the present invention will be described with reference to the accompanying drawing. Each embodiment described below is specifically described for better understanding of the gist of the invention, and does not limit the present invention unless particularly stated otherwise.

A method for producing lithium sulfide according to the present embodiment is, for example, a method for producing lithium sulfide (Li₂S) which is a constituent material of a sulfide solid electrolyte used as a solid electrolyte constituting an all-solid state battery. The sulfide solid electrolyte material is suitable as a material for an invehicle battery of an electric vehicle (EV) or a hybrid electric vehicle (HEV) since it has high ion conductivity and is non-flammable and thus has high safety.

The method for producing lithium sulfide according to the present embodiment includes a heat treatment step of flowing a sulfur gas (elemental sulfur gas) into a reaction chamber accommodating a lithium salt and heating the lithium salt at a high temperature to cause the lithium salt to react with the sulfur gas to generate the lithium sulfide.

It is preferable that the sulfur gas (elemental sulfur gas) is used in a method in which a sulfur vapor generator is placed outside the reaction chamber and a sulfur gas generated by the sulfur vapor generator is supplied into the reaction chamber together with a carrier gas consisting of an inert gas such as an Ar gas. A concentration of the sulfur gas supplied to the reaction chamber can be adjusted by the amount of sulfur gas generated in the sulfur vapor generator and a flow rate of the carrier gas. Here, a mixing ratio of the inert gas and the sulfur gas (elemental sulfur gas) is not particularly limited, and the inert gas and the sulfur gas can be mixed at any ratio.

In addition, it is preferable that the lithium salt as a raw material is one or two or more selected from lithium sulfate, lithium carbonate, lithium hydroxide, and lithium oxide.

By causing the lithium salt to react with the sulfur gas, lithium sulfide is reliably produced.

Although not particularly limited, for example, in a case where a volume of the reaction chamber is 1 m³, the amount of the lithium salt charged may be 100 g or more, 1,000 g or more, or 10,000 g or more, and may be 100 g or less, 10 g or less, or 1 g or less. In addition, the volume may be proportionally scaled up or down while maintaining the above relationship.

In order to suppress the generation of carbon dioxide gas (CO₂ gas) during the reaction, it is preferable to use a material other than lithium carbonate as the lithium salt.

Here, in the present embodiment, it is preferable that, in the heating conditions in the heat treatment step, an atmosphere is a dew point of -60°C or lower, a heating temperature is in a range of 500°C or higher and 938°C or lower, and a retention time at the heating temperature is in a range of 5 minutes or more and 420 minutes or less.

In a case where the atmosphere is set to the dew point of -60°C or lower, a moisture content in the atmosphere is sufficiently low, and a deterioration of lithium sulfide, which is a product, can be suppressed. Although not particularly limited, the dew point of the atmosphere may be -80°C or higher.

In addition, in a case where the heating temperature is 500°C or higher, a reaction rate between the lithium salt and the sulfur gas is secured, and it is possible to efficiently generate lithium sulfide. On the other hand, in a case where the heating temperature is 938°C or lower, the reaction is performed at a melting point of lithium sulfide or lower, and lithium sulfide can be produced with a good yield.

The heating temperature is even more preferably 600°C or higher. In addition, the heating temperature is still more preferably 750°C or lower.

In a case where the retention time at the heating temperature is 5 minutes or more, it is possible to sufficiently cause the lithium salt to react with the sulfur gas, and it is possible to further suppress a residue of an unreacted substance and generation of a by-product. On the other hand, in a case where the retention time at the heating temperature is 300 minutes or less, it is possible to more efficiently generate lithium sulfide.

The retention time at the heating temperature is even more preferably 60 minutes or more. In addition, the retention time at the heating temperature is still more preferably 300 minutes or less.

In the method for producing lithium sulfide according to the present embodiment, it is preferable that a sulfur partial pressure P_{S} in the reaction chamber in the heat treatment step is 1 Pa or more.

In a case where the sulfur partial pressure P_{S} in the reaction chamber in the heat treatment step is 1 Pa or more, the sulfur gas is sufficiently present in the reaction chamber, the reaction between the lithium salt and the sulfur gas is promoted, and it is possible to efficiently produce lithium sulfide. In addition, it is possible to suppress lithium raw materials from remaining and being mixed with the generated lithium sulfide as an impurity.

The sulfur partial pressure P_{S} in the reaction chamber in the heat treatment step is even more preferably 1 × 10² Pa or more. In addition, the upper limit of the sulfur partial pressure P_{S} in the reaction chamber in the heat treatment step is not particularly limited, but is preferably 1 × 10⁴ Pa or less.

In the method for producing lithium sulfide according to the present embodiment, it is preferable that an oxygen partial pressure Po in the reaction chamber in the heat treatment step is 1 × 10³ Pa or less.

In a case where the oxygen partial pressure P_{O} in the reaction chamber in the heat treatment step is 1 × 10³ Pa or less, the content of the oxygen gas in the reaction chamber is low, and it is possible to suppress the generation of a lithium compound (for example, lithium oxide, lithium sulfate, and the like) other than lithium sulfide by the reaction between the lithium salt and the oxygen gas. Therefore, it is possible to produce lithium sulfide having a small amount of impurities, suppress the consumption of the lithium salt, and efficiently produce lithium sulfide.

The oxygen partial pressure P_{O} in the reaction chamber in the heat treatment step is even more preferably 1 × 10² Pa or less. In addition, the lower limit of the oxygen partial pressure P_{O} in the reaction chamber in the heat treatment step is not particularly limited, but is substantially 1 × 10⁻⁵ Pa or more.

In the present embodiment, the reaction chamber is not particularly limited, but for example, by using a rotary kiln as the reaction chamber, and introducing the lithium salt into a rotary kiln furnace in which the sulfur gas is allowed to flow and the temperature is kept at a predetermined temperature, it is possible to cause the lithium salt to react with the sulfur gas to generate lithium sulfide.

In the present embodiment, in a case where the rotary kiln is used as the reaction chamber, a rotation speed of the kiln may be set to 0.1 rpm or more and 20 rpm or less.

Specifically, the lithium salt is accommodated in a hopper at an upper portion of a rotary kiln, the sulfur gas is allowed to flow in the rotary kiln together with an inert gas, the inside of the rotary kiln is heated to a predetermined heating temperature, and the lithium salt in the hopper is supplied to the rotary kiln at a constant rate using a screw feeder, thereby continuously causing the lithium salt to react with the sulfur gas to produce lithium sulfide.

By the above-described steps, lithium sulfide in which the mixing of the unreacted raw materials and by-products is suppressed is produced.

According to the method for producing lithium sulfide of the present embodiment having the configuration described above, since the heat treatment step of flowing the sulfur gas into the reaction chamber accommodating the lithium salt and heating the lithium salt to generate the lithium sulfide is provided, the lithium sulfide can be efficiently produced by directly causing the lithium salt to react with the sulfur gas, and it is possible to suppress the residue of the unreacted raw materials and the generation of by-products.

In the present embodiment, in a case where, as the heating conditions in the heat treatment step, the atmosphere is the dew point of -60°C or lower, and the heating temperature is in the range of 500°C or higher and 938°C or lower, it is possible to sufficiently promote a reaction between the lithium salt and the sulfur gas, and it is possible to efficiently produce high-quality lithium sulfide with a small amount of unreacted raw materials and by-products.

In the present embodiment, in a case where the lithium salt is one or two or more selected from lithium sulfate, lithium carbonate, lithium hydroxide, and lithium oxide, it is possible to reliably produce lithium sulfide by a reaction between the lithium salt and the sulfur gas.

In the present embodiment, in a case where a material other than lithium carbonate is used as the lithium salt, it is possible to suppress the generation of the carbon dioxide gas in the heat treatment step.

In the present embodiment, in a case where the sulfur partial pressure P_{S} in the reaction chamber in the heat treatment step is 1 × 10⁻⁵ Pa or more, the reaction between the lithium salt and the sulfur gas reliably proceeds, and it is possible to efficiently produce lithium sulfide.

**In** addition, it is possible to suppress remaining of lithium raw materials and mixing of an unreacted lithium raw material with the generated lithium sulfide as an impurity, and to produce high-quality lithium sulfide having a small amount of impurities.

In the present embodiment, in a case where the oxygen partial pressure P_{O} in the reaction chamber in the heat treatment step is 1 × 10⁻² Pa or less, it is possible to suppress the generation of a lithium compound other than lithium sulfide due to the reaction between the lithium salt and oxygen, and it is possible to produce high-quality lithium sulfide having a small amount of impurities. In addition, it is possible to suppress the consumption of the lithium salt by an oxygen gas, and it is possible to efficiently produce lithium sulfide.

In the present embodiment, in a case where the reaction chamber is a rotary kiln, the lithium salt and the sulfur gas can be continuously reacted with each other by continuously supplying the lithium salt to the rotary kiln through which the sulfur gas flows, and it is possible to more efficiently produce lithium sulfide.

Although one embodiment of the present invention has been described above, the present invention is not limited thereto and can be appropriately modified without departing from the technical idea of the invention.

### Examples

Verification experiments performed to verify the effectiveness of the present invention will be described.

### (Examples 1 to 12)

A powder of a sufficiently dried lithium salt (average particle size: 25 µm) was weighed to have a weight shown in Table 1, accommodated in an alumina boat, charged into a tubular furnace, and heated at an atmosphere and a heating temperature shown in Table 1.

Then, a sulfur generating tank in which sulfur was disposed was heated to 400°C to generate a sulfur gas, and an Ar gas flowing in a sulfur generating device was allowed to flow into the tubular furnace to allow the sulfur gas to flow into the tubular furnace. Table 1 shows the amount of sulfur gas generated, the amount of gas (a mixed gas of sulfur gas and Ar) introduced into the tubular furnace, a sulfur partial pressure in the tubular furnace, and an oxygen partial pressure.

Lithium sulfide was produced by causing the lithium salt to react with the sulfur gas in the tubular furnace.

### (Comparative Example)

A powder of a sufficiently dried lithium salt (average particle size: 25 µm) was weighed to have a weight shown in Table 1, accommodated in an alumina board, charged into a tubular furnace, and heated to a heating temperature shown in Table 1.

In this comparative example, the sulfur gas was not introduced, and only the Ar gas was allowed to flow in the tubular furnace. The sulfur partial pressure and the oxygen partial pressure in the tubular furnace are shown in Table 1.

The presence or absence of the unreacted substance and the by-product was evaluated for the specimen obtained as described above as follows.

The obtained specimen was pulverized with an agate mortar, powder X-ray diffraction measurement was carried out using this powder specimen, and the presence or absence of the unreacted substance and the by-product was evaluated as an "impurity intensity ratio". FIG. 1 shows an example of a powder X-ray diffraction measurement result.

The impurity intensity ratio is described as a value obtained by dividing a strongest peak intensity of various impurities excluding a background by a strongest peak intensity of lithium sulfide located at 27.04°. "N.D." in Table 1 indicates that no impurities were detected.

**[Table 1]**

| | | Lithium salt | | Heat treatment condition | | | | | Evaluation |
|---|---|---|---|---|---|---|---|---|---|
| | | Type | Weight (g) | Temperature (°C) | Sulfur evaporation amount (g) | Ar gas flow rate (L/min) | Sulfur partial pressure (Pa) | Oxygen partial pressure (Pa) | Impurity intensity ratio (%) |
| Example | 1 | Lithium sulfate | 10.11 | 700 | 60 | 0.1 | 4.1×10³ | 1.0 | N.D. |
| | 2 | Lithium sulfate | 10.37 | 700 | 120 | 0.2 | 2.7×10³ | 1.0 | N.D. |
| | 3 | Lithium sulfate | 10.53 | 700 | 600 | 1.0 | 2.7×10³ | 1.0 | N.D. |
| | 4 | Lithium sulfate | 10.61 | 500 | 60 | 0.1 | 2.7×10³ | 1.0 | 3.22 |
| | 5 | Lithium sulfate | 10.55 | 500 | 120 | 0.2 | 2.7×10³ | 1.0 | 2.37 |
| | 6 | Lithium sulfate | 10.86 | 500 | 600 | 1.0 | 2.7×10³ | 1.0 | 0.89 |
| | 7 | Lithium sulfate | 10.48 | 850 | 600 | 1.0 | 2.7×10³ | 1.0 | N.D. |
| | 8 | Lithium sulfate | 10.29 | 900 | 600 | 1.0 | 2.7×10³ | 1.0 | N.D. |
| | 9 | Lithium sulfate | 10.29 | 900 | 60 | 5.0 | 2.7×10³ | 1.0 | 12.13 |
| | 10 | Lithium carbonate | 7.41 | 700 | 600 | 1.0 | 2.7×10³ | 1.0 | N.D. |
| | 11 | Lithium hydroxide | 4.79 | 700 | 600 | 1.0 | 2.7×10³ | 1.0 | N.D. |
| | 12 | Lithium oxide | 2.99 | 700 | 600 | 1.0 | 7.6×10² | 1.0 | N.D. |
| Comparative Example | | Lithium sulfate | 10.38 | 700 | 0 | 0.1 | 0.0 | 1.0 | 100.00 |

In the comparative example, lithium sulfate was confirmed. It is presumed that the sulfur gas was not introduced into the furnace and the lithium sulfate remained unreacted.

On the other hand, in Examples, as shown in FIG. 1, an unreacted residue other than lithium sulfide and by-product were not confirmed.

As described above, according to the present invention, it was confirmed that it is possible to provide the method for producing lithium sulfide, which can stably produce high-quality lithium sulfide by discharging an excessive amount of a sulfur gas as a waste gas, thereby suppressing a residue of unreacted raw materials and generation of by-products.

### INDUSTRIAL APPLICABILITY

According to the present invention, it is possible to provide the method for producing lithium sulfide, which can stably produce high-quality lithium sulfide by discharging an excessive amount of a sulfur gas as a waste gas, thereby suppressing a residue of unreacted raw materials and generation of by-products.

## Claims

1. A method for producing lithium sulfide, the method comprising:
a heat treatment step of flowing a sulfur gas into a reaction chamber accommodating a lithium salt and heating the lithium salt to generate lithium sulfide.

2. The method for producing lithium sulfide according to Claim 1,
wherein, in heating conditions in the heat treatment step, a heating temperature is in a range of 500°C or higher and 938°C or lower.

3. The method for producing lithium sulfide according to Claim 1 or 2,
wherein the lithium salt is one or two or more selected from lithium sulfate, lithium carbonate, lithium hydroxide, and lithium oxide.

4. The method for producing lithium sulfide according to Claim 1 or 2,
wherein a sulfur partial pressure P_{S} in the reaction chamber in the heat treatment step is 1 Pa or more.

5. The method for producing lithium sulfide according to Claim 1 or 2,
wherein an oxygen partial pressure P_{O} in the reaction chamber in the heat treatment step is 1 × 10³ Pa or less.

6. The method for producing lithium sulfide according to Claim 1 or 2,
wherein a material other than lithium carbonate is used as the lithium salt.
